# EUROPÄISCHE PATENTSCHRIFT

(11) **EP 2 423 049 B1**
(45) Veröffentlichungstag und Bekanntmachung des Hinweises auf die Patenterteilung: **21.11.2012**
(21) Anmeldenummer: 10008918.4
(22) Anmeldetag: 27.08.2010
(51) Int. Cl.: B60Q 1/30, B60Q 1/00

(54) **Wohnwagenrückleuchte**
Caravan rear light
Feu arrière de caravane

(43) Veröffentlichungstag der Anmeldung: 29.02.2012
(73) Patentinhaber: Hobby-Wohnwagenwerk Ing. Harald Striewski GmbH, 24787 Fockbek (DE)
(72) Erfinder: Striewski, Harald, 24813 Schülp (DE)
(74) Vertreter: Stenger, Watzke & Ring

(56) Entgegenhaltungen:
- DE-A1- 10 018 800
- US-A- 5 144 538
- US-A1- 2004 202 000
- US-A1- 2010 078 946

## Beschreibung

Die Erfindung betrifft eine Wohnwagenrückleuchte, mit einem Gehäuse zur Aufnahme eines Leuchtmittels und mit einer zumindest teilweise lichttransparent ausgebildeten Gehäuseabdeckung.

Rückleuchteneinheiten .- auch Rückleuchten genannt - für Wohnwagen der eingangsgenannten Art sind aus dem Stand der Technik an sich gut bekannt, weshalb es eines gesonderten druckschrifuichen Nachweises an dieser Stelle nicht bedarf.

Das Gehäuse von aus dem Stand der Technik bekannten Rückleuchten ist typischer Welse aus Kunststoff gebildet. Es stellt einzelne Gehäusekammem zur Aufnahme von Leuchtmitteln zur Verfügung. Die frontseitige Abdeckung des Gehäuses erfolgt durch eine zumindest teilweise lichttransparent ausgebildete Gehäuseabdeckung, die typischer Weise unter Zwischenschaltung einer Dichtung mit dem Gehäuse verbunden, beispielsweise verschraubt oder verrastet ist siehe z.B. US 2004/202 000 A1.

Im endmontierten Zustand ist die Rückleuchte in aller Regel lösbar an einem Karosserieteil des Wohnwagens angeordnet. Dabei kann die Rückleuchte entweder auf das entsprechende Karosserieteil des Wohnwagens aufgesetzt oder in eine entsprechende Ausnehmung des Karosserletells eingesetzt sein.

Obgleich sich Rückleuchtenausgestaltungen der vorgenannten Art bewährt haben, besteht der Wunsch nach einer Verbesserung, weshalb es die Aufgabe der Erfindung ist, eine gegenüber dem Stand der Technik neuartige Rückleuchte vorzuschlagen.

Zur Lösung dieser Aufgabe wird mit der Erfindung eine Wohnwagenrückleuchte gemäß Anspruch 1 vorgeschlagen.

Der erfindungsgemäß in die Rückleuchte integrierte Griff dient als Rangiergriff. Er dient im Rangierfall einem Verwender, den Wohnwagen ergreifen und für die Rangiertätigkeit handhaben zu können. Eine solche Rangiertätigkeit findet typischer Weise zum Zwecke der Ausrichtung des Wohnwagens auf einem Stellplatz statt.

Aus dem Stand der Technik bekannte Rangiergriffe sind bügelförmig ausgebildet und separat ausgebildet am Heck eines Wohnwagens angeordnet, wobei Sie auf die Karosserie des Wohnwagens aufgesetzt und mit dieser in aller Regel verschraubt sind.

Obgleich sich die vorbekannten Rangiergriffe im alltäglichen Praxiseinsatz bewährt haben, sind sie nicht frei von Nachteilen. So wird es als nachteilig empfunden, dass die aus dem Stand der Technik vorbekannten Rangiergriffe konstruküonsbedingt auf die Karosserie des Wohnwagens aufgesetzt sind, was bedingt, dass der Griff gegenüber der Karosserie vor-steht. Hierdurch ist ein gewisses Verletzungsrisiko gegeben. Darüber hinaus kann es ins-besondere bei infolge von unsachgemäßen Rückwärtsfahrten eintretenden Kollisionen zu Beschädigungen kommen, wobei derart beschädigte Rangiergriffe ein besonderes Verlet-zungsrisiko darstellen.

Die erfindungsgemäße Rückteuchtenausgestaitung schafft hier Abhilfe. Im Unterschied zum Stand der Technik kommen mit der Erfindung in Rückleuchten integrierte Griffe zum Einsatz. Diese Ausgestaltung ist in vielerlei Hinsicht von Vorteil. Zum einen kann das vorerläuterte und den aus dem Stand der Technik vorbekannten Griffen anhaftende Verletzungsrisiko minimiert werden. Zum anderen verringert sich herstellerseitig der Montageaufwand. Der mit einer Griffmontage einhergehende Aufwand kann vollends eingespart werden, da es nur noch einer Montage der Rückleuchte bedarf, die einen Rangiergriff integrativ bereitstellt.

Darüber hinaus erweist sich die erfindungsgemäße Konstruktion insofern von Vorteil, als das der integrativ von der Rückleuchte bereitgestellte Griff vom Gehäuse der Rückleuchte vor ungewollten Verschmutzungen weitestgehend geschützt ist, so dass im Unterschied zum Stand der Technik Griffverschmutzungen minimiert werden können, was die Handhabung im Rangierfall für einen Anwender angenehmer macht

Der Griff kann gemäß einer ersten Alternative der Erfindung einstückig mit dem Gehäuse der Rückleuchte ausgebildet sein. Gegebenenfalls ist für den Griff ein Einlegteil beispielsweise aus Metall vorgesehen, das im Zuge der Herstellung mit Kunststoff ummantelt, beispielsweise umspritzt wird.

Gemäß einer zweiten Alternative der Erfindung ist vorgesehen, dass der Griff als ein zum Gehäuse separates Bauteil ausgebildet und am Gehäuse vorzugsweise lösbar angeordnet ist. Gemäß dieser Ausgestaltungsform werden das Gehäuse für das Rücklicht einerseits und der Griff andererseits als separate Bauteile ausgebildet. Im Rahmen einer Vor- oder Endmontage erfolgt dann die Anordnung des Griffes am Gehäuse des Rücklichts, wobei die Verbindung bevorzugter Weise lösbar ausgestaltet ist, so dass auch im Reparaturfall eine Demontage ermöglicht ist Als Befestigungsmittel zur Anordnung des Griffs am Rücklichtgehäuse kommen insbesondere Schrauben in Betracht.

Gemäß einem weiteren Merkmal der Erfindung ist vorgesehen, dass der Griff bündig mit der Gehäuseabdeckung abschließt Mit dieser Ausgestaltung ist erreicht, dass der Griff von der Griffmulde vollends aufgenommen ist, das heißt der Griff vollends in die von der Karosserie des Wohnwagens bereitgestellte Umhüllung integriert ist. Der Griff steht gemäß dieser Ausgestaltung nicht relativ gegenüber der Karosserie des Wohnwagens vor. Eine Minimierung des Verletzungsrisikos wird so erreicht. Darüber hinaus wird die Aerodynamik des Wohnwagens verbessert.

Gemäß einem weiteren Merkmal der Erfindung ist vorgesehen, dass das Gehäuse Kammern zur Aufnahme von Leuchtmitteln aufweist, wobei der Griff in Verlängerung einer solchen Gehäusekammer ausgebildet ist Eine solche Ausgestaltung erweist sich insbesondere aus fertigungstechnischer Sicht als vergleichsweise einfach. Darüber hinaus erfolgt Im Belastungsfall eine begünstigte Krafteinleitung in das Rücklichtgehäuse und von dort aus in die Karoserie des Wohnwagens.

Der Griff kann gemäß einem weiteren Merkmal der Erfindung L-förmig oder bügelförmig ausgebildet sein. Dabei ergibt sich die Ausgestaltung des Griffs insbesondere in Abhängigkeit der geometrischen Ausgestaltung der Rückleuchte bzw. des Rückleuchtengehäuses.

Gemäß einem weiteren Merkmal der Erfindung ist vorgesehen, dass der Griff eine Applika-tion trägt. "Applikation" im Sinne der Erfindung meint Funktionselemente, die die Montage, die Handhabung, die Reinigung und/oder dergleichen des Griffes vereinfachen. Als Appli-kation kann beispielsweise eine aus Gummi gebildete Einlage vorgesehen sein. Der Griff wird so für einen Verwender besser handhabbar, nicht zuletzt auch wegen der vergrößerten Reibung zwischen dem Griff und einer Hand des Verwenders. Eine Applikation in diesem Sinne kann auch eine Beschichtung sein, die einer unerwünschten Verschmutzung des Griffes entgegenwirkt.

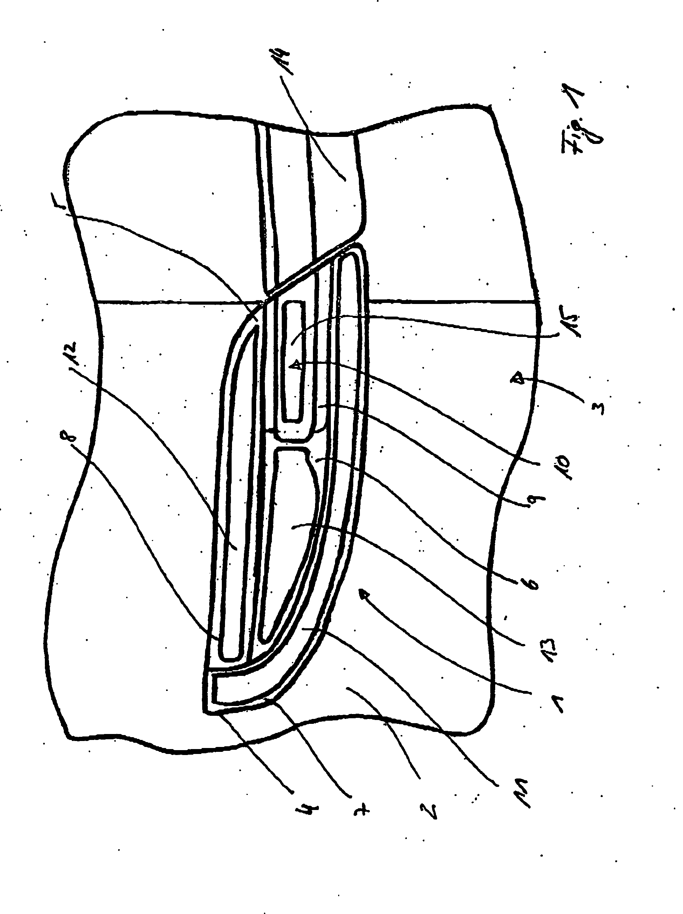

Weitere Merkmale und Vorteile der Erfindung ergeben sich aus der nachfolgenden Beschreibung anhand der einzigen Figur 1, die in schematischer Darstellung eine Rückleuchte nach der Erfindung zeigt.

Figur 1 lässt In schematischer Darstellung die Rückleuchteneinheit - auch Rückleuchte genannt - eines ausschnittsweise dargestellten Wohnwagens 3 erkennen. Die Rückleuchte 1 ist in eine nicht näher dargestellte Ausnehmung der Karosserie 2 eingesetzt.

Die Rückleuchte 1 verfügt über ein Gehäuse 4, das einseitig offen ausgebildet ist. Im endmontierten Zustand ist die offene Seite des Gehäuses 4 mit einer lichttransparent ausgebildete Gehäuseabdeckung 5 verschlossen.

Das Gehäuse 4 stellt im gezeigten Ausführungsbeispiel Kammem 6, 7 und 8 bereit, die jeweils der Aufnahme eines Leuchtmittels 11, 12 und 13 dienen. Dabei sind im gezeigten Ausführungsbeispiel die Leuchtmittel 11, 12 und 13 als LEDs ausgebildet und die Gehäusekammer 7 nimmt das Leuchtmittel 11, die Gehäusekammer 8 das Leuchtmittel 12 und die Gehäusekammer 6 das Leuchtmittel 13 auf. Bei dem Leuchtmittel 11 kann es sich beispielsweise um das Rück- und Bremslicht, bei dem Leuchtmitel 12 um das Blinkerlicht und bei der Rückleuchte 13 um das Rückfahrlicht handeln.

Die Rückleuchte 1verfügt erfindungsgemäß über eine Griffmulde 9 und einen Griff 10, wobei der Griff 10 von der Griffmulde zumindest teilweise aufgenommen ist. Bevorzugter Weise schließen der Griff 10 und die Gehäuseabdeckung 5 bündig ab, so dass der Griff 10 nicht aus der Rückleuchte 1 und damit auch nicht aus der von der Karosserie 2 bereitge-stellten Wohnwagenumhüllung heraussteht.

Der Griff ist L-förmig ausgebildet und trägt eine Applikation 15 in Form eines farblich abge-setzten Zierelements.

Die Karosserie 2 des Wohnwagens 3 trägt ferner einen Zierstreifen 14, der die Rückleuchte 1 optisch aufnimmt und weiterführt.

**Bezugszeichen**
- 1: Rückleuchte
- 2: Karosserie
- 3: Wohnwagen
- 4: Gehäuse
- 5: Gehäuseabdeckung
- 6: Kammer
- 7: Kammer
- 8: Kammer
- 9: Griffmulde
- 10: Griff
- 11: Leuchtmittel
- 12: Leuchtmittel
- 13: Leuchtmittal
- 14: Zierstreifen
- 15: Applikation

## Patentansprüche

1. Wohnwagenrückleuchte, mit einem Gehäuse (4) zur Aufnahme eines Leuchtmittels (11, 12, 13), mit einer zumindest teilweise lichttransparent ausgebildeten Gehäuseabdeckung (5), und mit einem Rangiergriff (10) und einer vom Gehäuse (4) bereitgestellten Griffmulde (9) wobei der Rangiergriff(10) von der Griffmulde (9) zumindest teilweise aufgenommen ist.

2. Wohnwagenrückleuchte nach Anspruch 1, **dadurch gekennzeichnete, dass** der Rangiergriff (10) einstückig mit dem Gehäuse (4) ausgebildet ist.

3. Wohnwagenrückleuchte nach Anspruch 1, **dadurch gekennzeichnet, dass** der Rangiergriff (10) als ein zum Gehäuse (4) separates Bauteil ausgebildet und am Gehäuse (4) vorzugsweise lösbar angeordnet ist.

4. Wohnwagenrückleuchte nach einem der vorhergehenden Ansprüche, **dadurch gekennzeichnet, dass** der Rangiergriff (10) aus Kunststoff und/oder Metall gebildet ist.

5. Wohnwagenrückteuchte nach einem der vorhergehenden Ansprüche, **dadurch gekennzeichnet, dass** der Rangiergriff (10) bündig mit der Gehäuseabdeckung (5) abschließt.

6. Wohnwagenrückleuchte nach einem der vorhergehenden Ansprüche, **dadurch gekennzeichnet, dass** das Gehäuse (4) Kammern (6, 7, 8) zur Aufnahme von Leuchtmitteln (11, 12, 13) aufweist, wobei der Rangiergriff (10) in Verlägerung einer solchen Gehäusekammer (6,7, 8) ausgebildet ist.

7. Wohnwagenrückleuchte nach einem der vorhergehenden Ansprüche, **dadurch gekennzeichnet, dass** der Rangiergriff (10) L-förmig ausgebildet ist.

8. Wohnwagenrückleuchte nach einem der vorhergehenden Ansprüche 1 bis 6, **dadurch gekennzeichnet, dass** der Rangiergriff (10) bügelförmig ausgebildet ist.

9. Wohnwagenrückleuchte nach einem der vorhergehenden Ansprüche, **dadurch gekennzeichnet, dass** der Rangiergriff (10) eine Applikation trägt.

## Claims

1. A caravan rear light comprising a housing (4) for receiving an illuminant (11, 12, 13), comprising an at least partially light transparent housing cover (5) and comprising a manoeuvring handle (10) and a handle trough (9) provided by the housing (4), wherein the manoeuvring handle (10) is at least partially received by the handle trough (9).

2. A caravan rear light according to claim 1, **characterized in that** the manoeuvring handle (10) is formed in one piece with the housing (4).

3. A caravan rear light according to claim 1, **characterized in that** the manoeuvring handle (10) is a separate member with respect to the housing (4) and is placed preferably in a detachable manner on the housing (4).

4. A caravan rear light according to one of the preceding claims, **characterized in that** the manoeuvring handle (10) is made of synthetic material and/or metal.

5. A caravan rear light according to one of the preceding claims, **characterized in that** the manoeuvring handle (10) is flush with the housing cover (5).

6. A caravan rear light according to one of the preceding claims, **characterized in that** the housing (4) comprises chambers (6, 7, 8) for receiving illuminants (11, 12, 13), wherein the manoeuvring handle (10) is a prolongation of such a housing chamber (6, 7, 8).

7. A caravan rear light according to one of the preceding claims, **characterized in that** the manoeuvring handle (10) is L-shaped.

8. A caravan rear light according to one of the preceding claims 1 through 6, **characterized in that** the manoeuvring handle (10) is yoke-shaped.

9. A caravan rear light according to one of the preceding claims, **characterized in that** the manoeuvring handle (10) carries an application.

## Revendications

1. Feu arrière de caravane comprenant un boîtier (4) pour recevoir un agent lumineux (11, 12, 13), comprenant un recouvrement de boîtier (5) qui est au moins partiellement transparent à la lumière et comprenant une manche de manoeuvre (10) et un creux de manche (9) fourni par le boîtier (4), la manche de manoeuvre (10) étant au moins partiellement reçue par le creux de manche (9).

2. Feu arrière de caravane selon la revendication 1, **caractérisé en ce que** la manche de manoeuvre (10) est solidaire du boîtier (4).

3. Feu arrière de caravane selon la revendication 1, **caractérisé en ce que** la manche de manoeuvre (10) est un élément séparé par rapport au boîtier (4) et elle est de préférence disposée de manière amovible sur le boîtier (4).

4. Feu arrière de caravane selon l'une des revendications précédentes, **caractérisé en ce que** la manche de manoeuvre (10) est fabriquée en matière artificielle et/ou en métal.

5. Feu arrière de caravane selon l'une des revendications précédentes, **caractérisé en ce que** la manche de manoeuvre (10) est à fleur du recouvrement de boîtier (5).

6. Feu arrière de caravane selon l'une des revendications précédentes, **caractérisé en ce que** le boîtier (4) comprend des chambres (6, 7, 8) pour recevoir des agents lumineux (11, 12, 13), la manche de manoeuvre (10) étant un prolongement d'une telle chambre de boîtier (6, 7, 8).

7. Feu arrière de caravane selon l'une des revendications précédentes, **caractérisé en ce que** la manche de manoeuvre (10) a la forme d'un L.

8. Feu arrière de caravane selon l'une des revendications précédentes 1 à 6, **caractérisé en ce que** la manche de manoeuvre (10) a la forme d'une pièce recourbée en arc.

9. Feu arrière de caravane selon l'une des revendications précédentes, **caractérisé en ce que** la manche de manoeuvré (10) porte une application.
